# EUROPEAN PATENT SPECIFICATION

(11) **EP 2 349 702 B1**
(45) Date of publication and mention of the grant of the patent: **01.05.2013**
(21) Application number: 09752173.6
(22) Date of filing: 11.11.2009
(51) Int. Cl.: B29D 30/06, G01M 1/32, F16F 15/32

(54) **METHOD, APPARATUS AND SYSTEM FOR PROCESSING OF A VEHICLE TYRE, WHEREIN A BALANCING SUBSTANCE IS APPLIED TO THE VEHICLE TYRE**
VERFAHREN, VORRICHTUNG UND SYSTEM ZUR BEHANDLUNG EINES FAHRZEUGREIFENS, BEI DEM EINE AUSWUCHTSUBSTANZ AN DEN FAHRZEUGREIFEN APPLIZIERT WIRD
PROCEDE, APPAREIL ET SYSTEME DE TRAITEMENT D'UN PNEU DE VEHICULE, DANS LEQUEL UNE SUBSTANCE D'EQUILIBRAGE EST APPLIQUÉE SUR LE PNEU DE VEHICULE

(30) Priority: 12.11.2008 EP 08168915
(43) Date of publication of application: 03.08.2011
(73) Proprietor: Carnehammar, Lars Bertil, 8032 Zürich (CH)
(72) Inventor: SEITZ, Norbert, 82194 Gröbenzell (DE)
(74) Representative: Plougmann & Vingtoft A/S
(86) International application number: PCT/EP2009/065004
(87) International publication number: WO 2010/055068

(56) References cited:
- EP-A1- 1 759 893
- EP-A2- 0 281 124
- EP-A2- 1 219 944
- WO-A1-2008/009696
- WO-A1-2008/038656
- WO-A1-2008/084708
- WO-A2-02/50505
- US-A- 4 106 964
- US-A1- 2005 203 248

## Description

### Field of the Invention

Embodiments of the invention described herein relate generally to processing of vehicle wheels, and more particularly to a method, an apparatus and a system for processing of a vehicle tyre, for example a pneumatic tyre wherein a balancing substance is applied to the vehicle type.

### Background of the Invention

Driving experience of a vehicle is determined, among other factors, by surface quality of the road and quality, e. g. homogeneity or uniformity, of the vehicle's wheels. A vehicle wheel is a system comprising a tyre, a rim and a valve. Non-uniformity or inhomogeneity of the vehicle wheel may result from an uneven mass distribution, i. e. unbalance, of a tyre or a rim or both, a geometrical abnormality, for example axial run-out or radial run-out or both, of the tyre or the rim or both, or a variation in axial, radial or tangential stiffness (axial-force fluctuation, radial-force fluctuation, tangential-force fluctuation) of the tyre or the rim or both, or off-centre mounting of the tyre on the rim or the rim on a vehicle's axle or both. Balancing the wheel improves the driving experience, as it compensates for the uneven mass distribution.

Tyres, for example bias tyres (bias ply tyres, cross ply tyres, diagonal tyres, diagonal ply tyres), bias-belted tyres, radial tyres (radial ply tyres), for example run-flat tyres, are generally manufactured by building a green tyre as a series of layers on a tyre-building drum, and curing the green tyre in a curing press using an expandable curing bladder inserted into the green tyre and forcing the green tyre into a curing mould of the curing press. Before heating, a release agent, for example a silicone-based release agent, is applied to the green tyre or the curing mould and the curing bladder. The release agent separates the tyre from the curing mould and curing bladder. During the curing, the layers are bonded, and a tread on an outer circumference of the tyre is formed by indentations of the curing mould. After the curing, the tyre is released from the curing press, eased by the release agent.

EP patent application 0 281 252 and corresponding US patent 4,867,792 disclose a thixotropic tyre balancing composition having a yield stress value between 30 Pa and 260 Pa being capable of balancing tyres by being able to flow under the influence of the vibrations induced when a heavy spot on the tyre hits the road surface. The balancing composition distributes itself in a wheel assembly consisting of a tyre mounted on a rim and having a heavy spot.

US patent 5,431,726 discloses a tyre gel balancing composition having a Storage modulus of between 3000 and 15000 Pa and a Specific Gravity less than 1000 kg/m³ in the temperature range between -20 °C and +90 °C and being capable of balancing tyres by being able to flow under the vibrations caused by imbalance in a wheel assembly.

DE patent application 3823926 discloses a method and an apparatus for the analysis of production-dependent, circumferentially distributed non-uniformities of a vehicle tyre, wherein a predetermined non-uniformity is analysed by successively mounting a plurality of tyres on the measuring rim in each case with the point having the non-uniformities to be analysed in the same respective angular rotation position, storing the magnitudes of the non-uniformities of each tyre measured around its circumference and adding them up. The method is suitable, inter alia, for the quality control of motor vehicle tyres.

PCT patent application WO 98/52009 and corresponding DE patent application 197 19 886 disclose a method for balancing automobile wheel assemblies comprising pneumatic tyres, comprising introducing a viscous balancing composition into the tyre; mounting the wheel on a rotatable assembly; pressing a rotatable drum and the tread surface of the wheel in the rotatable assembly against one another with a static force F, the axes of rotation of the drum and the wheel assembly being essentially parallel; and driving the drum and/or the wheel assembly to rotation for a time period T; the force F and the time T being sufficient to cause the balancing composition to be distributed inside the tyre, thereby balancing the wheel assembly. The method may preferably be carried out on an apparatus comprising a rotatable assembly on which a wheel assembly comprising a rim and a pneumatic tyre may be mounted; a rotatably mounted drum having an axis of rotation essentially parallel to that of the rotatable wheel assembly, the axes drum and/or the rotatable wheel assembly being capable of being moved in a direction towards and away from one another; driving means for rotating the rotatable wheel assembly and/or the drum; spring means and dampening means for providing static force and dampening in a direction between the axes of rotation of the drum and the rotatable wheel assembly, respectively, and essentially at right angles to said axes; and spring means and/or dampening means mounted between the axis of rotation of the rotatable wheel assembly and the ground and/or between the axis of rotation of the drum and the ground.

DE patent application 198 57 646 discloses a method for balancing tyres by introducing a balancing substance inside the tyre, comprising placing a substance with definite properties, shape, geometry and weight inside the tyre; and moving to the point of imbalance by rotating the tyre. The method may also be used for balancing other rotating objects.

DE patent application 198 53 691 discloses a method for introducing tyre-balancing substance as internal circumferential gel bead. The substance characteristic, shape, weight, geometry and its deposition locations are defined. The internal surface of the tyre exhibits defined shape and geometry. One or more endless strands may be employed. Strand cross section may be circular, semicircular, flattened, triangular, quadrilateral or polygonal. The one or more strands are distributed over the entire circumference, or just part of it, or both types of distribution take place. Strand portions are applied opposite the valve, when mounted on the rim. They are applied at or away from the equatorial plane, symmetrically, or else asymmetrically. The substance is injected through the valve in set quantity. A gel with a defined viscosity, thixotropy, long term stability, and compatibility with the tyre's inner surface is used. The tyre has one or more circumferential grooves, optionally between beads, to accept the substance.

The balancing substance may be accommodated in a tube-like hollow part glued along the internal circumference.

Thus, when a viscous, for example thixotropic, balancing substance, for example composition, is used for balancing a vehicle wheel comprising a tyre, it may be advantageous to insert into the tyre and bond to an inner liner of the tyre, for example by gluing, a part, such as a tube-like hollow part accommodating the balancing substance or a layer-like foam part delimiting strands of the balancing substance.

DE patent application 199 16 564 discloses a method and an apparatus for distributing weights in tyres, involving applying weight material to the inner liners of tyres. Tyre inhomogeneity is measured on a conventional machine before the tyre is on the rim and the measurement values are fed to a computer, which determines the quantity of weight material to be applied and where to apply it to compensate the inhomogeneity and which is coupled to a machine for applying weight material to the required place in the required quantity.

A viscous, for example thixotropic, balancing substance, for example composition, may be used for balancing a vehicle wheel comprising a tyre. The balancing substance may be inserted into the tyre before the tyre is mounted to a rim, or through a valve. For balancing the vehicle wheel, the substance may be distributed by driving a vehicle comprising the vehicle wheel, or mounting the vehicle wheel on a rotatable assembly; pressing a rotatable drum and a tread surface of the vehicle wheel in the rotatable assembly against one another with a static force; and driving the drum and/or the vehicle wheel to rotation for a time period; the force and the time being sufficient to cause the balancing composition to be distributed inside the tyre, thereby balanang the vehicle wheel.

If the tyre is according to its specification and, thus, does not have a significant geometrical abnormality, such as axial run-out or radial run-out, or significant variations in axial, radial or tangential stiffness, the balanced vehicle wheel provides, from a subjective views, for a comfortable driving experience.

However, vehicle manufactures and also repair shops need a method, an apparatus and a system for efficiently, and preferably predominantly automatically, processing of vehicle tyres.

WO 2008/009696A1 disclosed an invention relating to automobile tyres or tyre assemblies or parts thereof suitable for being balanced by introduction therein of a thixotropic balancing gel, wherein surfaces of the tyre or tyre assembly or part thereof which are intended to be in contact with the balancing gel are provided with a surface nanostructure with an average surface roughness in the range of 1-1000 nm. The surface nanostructure will enable the thixotropic balancing gel to move to the location, where it balances the tyre, significantly quicker than if the surface in question did not have the surface nanostructure.

US 4,106,964 discloses a method and apparatus for correcting imbalance occurring in pneumatic tires during their manufacture, Correction is made by depositing on the inside surface of the tire, at a balance-correcting position, a measured quantity of an uncured, Quick-curing, urethane or other liquid elastomer composition which bonds to such surface when cured, and curing the composition in place against the surface. The surface is cleaned in advance, as by washing, scrubbing, and/or abrading, to remove mold release agents and the like and to expose the bare rubber of the tire wall for bonding. The elastomer is desirably deposited in a pool, but may be dispensed in a stream of air or other gas directed toward the deposit. The air reduces the thickness of the pool and feathers its edges and thereby reduces the discontinuity between the deposited material and the tire surface, and promotes bonding. The elastomer composition is mixed in a dispensing head having a mixing chamber to which elastomer components are metered in predetermined proportions, and its Quantity is controlled by time. The composition is dispensed from the head through a nozzle. After the elastomer is deposited, the head is separated from the tire and then rinsed with solvent and dried with gas to prepare it for a subsequent operation. Control of tire handling and preparation, metering of components, and operation of the dispensing head may be partially or largely automatic in response to previously recorded tire imbalance information.

According WO 2008/084708, at a PCI step, a positional misalignment in a vulcanizer between a mold and a raw tire is grasped and fed back in real time to a raw tire supply apparatus, so that the misalignment is automatically corrected. During a post-cure inflation of a vulcanized tire, the PRO value of the same tire is measured, and the measured PRO value is compared with a preset reference value. When the measured PRO value exceeds the reference value, a control signal is output to the supply apparatus for supplying the raw tire to the vulcanizing apparatus. On the basis of the control signal, the raw tire supply apparatus makes the positional correction of the raw tire vulcanizing apparatus with respect to a mold, that is, the position and angle of raw tire gripping means, thereby to adjust the alignment and parallelism of the raw tire with respect to the mold.

EP 1 759 893 A1 discloses balance material being applied to the inner surface of a tire at one or more selected locations to offset an imbalance of the tire. The balance material is applied to the inner surface at a first viscosity, whereafter the balance material transforms to exhibit a second viscosity that is higher than the first viscosity and remains affixed to the inner surface of the tire at the point of application. A method of balancing a tire comprises determining the location and amount of balance material needed to correct an imbalance of the tire, applying the balance material at a first viscosity, and transforming the balance material to have a second viscosity sufficient to maintain the balance material at the desired location.

DE 9419066 U1 discloses a device for marking, labelling or inscribing of remoulded pneumatic motor vehicle tyres, comprising a support for the pneumatic tyre, a laser apparatus with an adjustable laser head for adjusting a laser beam to a predetermined position on a side wall of the pneumatic tyre and a steerable device, comprising an input device and a control device, for producing directed relative motion between the laser head and the pneumatic tyre.

For these and other reasons, there is a need for the invention as set forth in the following in the embodiments.

### Summary of the Invention

The invention aims to provide a method, an apparatus and a system for improved processing of a vehicle tyre according to the claims 1 , 14 and 15.

An aspect of the invention is a method of processing a vehicle tyre (20; 30; 40; 50; 60), comprising: mounting the tyre (20; 30; 40; 50; 60) to an apparatus for handling, for example moving, transporting and rotating, the tyre (20; 30; 40; 50; 60) processing the mounted tyre (50A-50E); handling the mounted tyre (50A-50E); and dismounting the processed tyre (20; 30; 40; 50; 60) from the apparatus for handling the tyre (20; 30; 40; 50; 60) characterized in that said processing comprises: determining a first amount of a thixotropic balancing substance (251; 351; 451; 651) from a characteristic or feature of the tyre (20; 30; 40; 50; 60), providing the first amount of the balancing substance (251; 351; 451; 651) to a first circumferential balancing area (250; 350; 450; 650) on an inner side (240; 340; 440; 640) of the vehicle tyre (20; 30; 40; 50; 60), and distributing the first amount of the balancing substance (251; 351; 451; 651) on the first balancing area (250; 350; 450; 650) substantially uniformly.

Another aspect of the invention is a method, wherein the apparatus is operated to mount the tyre 20; 30; 40; 50; 60; and the apparatus is operated to dismount the tyre 20; 30; 40; 50; 60.

Another aspect of the invention is a method, wherein the apparatus is operated to move the tyre 20; 30; 40; 50; 60 to an apparatus for processing the tyre 20; 30; 40; 50; 60.

Another aspect of the invention is a method, wherein the apparatus is operated to rotate the tyre 20; 30; 40; 50; 60 when the tyre 20; 30; 40; 50; 60 is processed by the apparatus for processing the tyre 20; 30; 40; 50; 60.

Another aspect of the invention is a method, wherein the apparatus is operated to communicate with the apparatus for processing the tyre 20; 30; 40; 50; 60 for coordinating rotating the tyre 20; 30; 40; 50; 60 with processing the tyre 20; 30; 40; 50; 60.

Another aspect of the invention is a method of wherein:
the robot moves the tyre 50 to a station for applying a nano substrate and rotates the tyre 50 in this station by a suitable extent, e.g. by 360 degrees, during application of the nano substrate;
the robot moves the tyre 50 to a station for applying a delimiter 671 and rotates the tyre 50 in this station by a suitable extent, e.g. 360 degrees, during application of the delimiter 671; and
robot moves the tyre 50 to a station for applying a balancing substrate and rotates the tyre 50 in this station by a suitable extent, e.g. 360 degrees, during application of the balancing substrate.

Preferably, the station for applying the nano substrate may be a first station, the station for applying the delimiter may be a second station, and the station for applying the balancing substrate may be a third station.

Another aspect of the invention is a method, further comprising providing a first amount of a thixotropic balancing substance 251; 351; 451; 651 to a first circumferential balancing area 250; 350; 450; 650 on an inner side 240; 340; 440; 640 of the vehicle tyre 20; 30; 40; 50; 60, comprising distributing the first amount of the balancing substance 251; 351; 451; 651 on the first balancing area 250; 350; 450; 650 substantially uniformly.

Another aspect of the invention is a method, wherein providing the first amount of the balancing substance 251; 351; 451; 651 further comprises providing the first amount of the balancing substance 251; 351; 451; 651 as a first strand 654 of balancing substance.

Another aspect of the invention is a method, wherein providing the first amount of the balancing substance 251; 351; 451; 651 further comprises providing the first amount of the balancing substance 251; 351; 451; 651 as a first strand 654 of balancing substance and a second strand 655 of balancing substance.

Another aspect of the invention is a method, wherein the first strand 654 of balancing substance is provided intermittent with the second strand 655 of balancing substance.

Another aspect of the invention is a method, wherein a cross section of the first strand 654 of balancing substance or the second strand 655 of balancing substance or both is circular, semicircular, flattened, triangular, quadrilateral or polygonal.

Another aspect of the invention is a method, wherein providing the first amount of the balancing substance 251; 351; 451; 651 further comprises determining the first amount of the balancing substance 251; 351; 451; 651 from a characteristic of the tyre 20; 30; 40; 50; 60, for example a size, type or model of the tyre 20; 30; 40; 50; 60.

Another aspect of the invention is a method, wherein the feature of the tyre 20; 30; 40; 50; 60, is a code or bar code on the tyre 20; 30; 40; 50; 60, or an electronic identification or radio-frequency identification RFID on or in the tyre 20; 30; 40; 50; 60.

Another aspect of the invention is a method, further comprising mounting the tyre 20; 30; 40; 50; 60 to process the tyre 20; 30; 40; 50; 60.

Another aspect of the invention is a method, mounting the tyre further comprises holding, for example gripping, spanning or clamping, an outer side, for example a circumferential tread surface 210; 310; 410; 610, of the tyre 20; 30; 40; 50; 60 or circumferential bead portions 225, 236; 325, 335; 425, 435; 625, 635 of the tyre 20; 30; 40; 50; 60.

Another aspect of the invention is a method, further comprising opening out circumferential bead portions 225, 235; 325, 335; 425, 435; 625, 635 of the tyre 20; 30; 40; 50; 60.

Another aspect of the invention is a method, wherein opening out the bead portions 225, 235; 325, 335; 425, 435; 625, 635 is partial or complete.

Another aspect of the invention is a method, further comprising removing old balancing substance 601 from the tyre 20; 30; 40; 50; 60.

Another aspect of the invention is a method, wherein removing old balancing substance 601 comprises cleaning out, for example loosening, rinsing or suction cleaning, the old balancing substance 601.

Another aspect of the invention is a method, further comprising inserting a delimiter 471; 671 into the tyre 20; 30; 40; 50; 60, the delimiter 471; 671 defining a first border of the first balancing area 250; 350; 450; 650.

Another aspect of the invention is a method, wherein inserting the delimiter 471; 671 comprises pre-processing a delimiter area 470; 670 on the inner side 240; 340; 440; 640; and mounting the delimiter 471; 671 on the delimiter area 470; 670.

Another aspect of the invention is a method, wherein pre-processing the delimiter area 470; 670 comprises activating, for example abrading, the delimiter area 470; 670; cleaning, for example rinsing or suction cleaning, the delimiter area 470; 670; or both.

Another aspect of the invention is a method, wherein mounting the delimiter 471; 671 on the delimiter area 470; 670 comprises inserting the delimiter 471; 671 into the tyre 20; 30; 40; 50; 60; fixing, for example gluing and drying or hardening, the delimiter 471; 671 onto the delimiter area 470; 670.

Another aspect of the invention is a method, comprising inserting a delimiter 471; 671 into the tyre 20; 30; 40; 50; 60 by forming the delimiter 471; 671 from a delimiter material.

Another aspect of the invention is a method, wherein inserting the delimiter 471; 671 comprises pre-processing a delimiter area 470; 670 on the inner side 240; 340; 440; 640; and forming the delimiter 471; 671 on the delimiter area 470; 670.

Another aspect of the invention is a method, wherein pre-processing the delimiter area 470; 670 comprises activating, for example abrading, the delimiter area 470; 670; cleaning, for example rinsing or suction cleaning, the delimiter area 470; 670; or both.

Another aspect of the invention is a method, wherein forming the delimiter 471; 671 on the delimiter area 470; 670 comprises applying the delimiter material to the delimiter area 470; 670; hardening the delimiter material.

Another aspect of the invention is a method, wherein applying the delimiter material to the delimiter area 470; 670 comprises extruding the delimiter material through a nozzle.

Another aspect of the invention is a method wherein the delimiter material comprises a curable plastic, for example polyurethane; and the delimiter 471; 671 comprises a cellular material, for example foam material, preferably porous foam material. Preferably, the skin of the delimiter 671 is one having a closed-cell skin after the chemical reaction. Then in a next step, at the upper side and at the inner side of the delimiter 671 a thin layer, for example 0,1 to 1 mm thin layer, preferably 0,5 mm thin layer, is removed for example by cutting, milling, grinding or laser treating, to open the cells of the foam and obtain an open-cell structure. The outer side of the layer maintains the closed-cell skin to form a border wall for the balancing substance.

Another aspect of the invention is a method, further comprising providing the first balancing area 250; 350; 450; 650 with a first nanostructure 252; 352; 452; 652. Another aspect of the invention is a method, wherein providing the balancing area 250; 350; 450; 650 with the first nanostructure 252; 352; 452; 652 comprises distributing, for example spraying and drying or hardening, a material, such as a varnish, comprising nanoparticles on the first balancing area 250; 350; 450; 650.

Another aspect of the invention is a method, further comprising rotating the tyre 20; 30; 40; 50; 60 or moving a tool to process the tyre 20; 30; 40; 50; 60 or both.

Another aspect of the invention is a method, wherein tools are intermittently employed to process intermittent segments of the tyre 20; 30; 40; 50; 60.

Another aspect of the invention is a method, further comprising mounting the tyre 20; 30; 40; 50; 60 on a rim to form a vehicle wheel.

Another aspect of the invention is a method, further comprising balancing the wheel, for example by spinning the wheel, preferably under a load condition.

Another aspect of the invention is a method, wherein the first balancing area 250; 350; 450; 650 is on an inner liner on the inner side 240; 340; 440; 640.

Another aspect of the invention is a method, wherein the first balancing area 250; 350; 450; 650 is on a first shoulder 221; 321; 421; 621 on the inner side 240; 340; 440; 640.

Another aspect of the invention is a method, wherein a second balancing area 260; 360; 460; 660 is processed similarly or identically to, and preferably simultaneously with, the first balancing area 250; 350; 450; 650.

Another aspect of the invention is a method, wherein the second balancing area 260; 360; 460; 660 is on a second shoulder 222; 322; 422; 622 on the inner side 240; 340; 440; 640.

Yet another aspect of the invention is an apparatus for processing a vehicle tyre 20; 30; 40; 50; 60 according to the method.

A further aspect of the invention is a system for processing a vehicle tyre 20; 30; 40; 50; 60 according to the method.

### Brief Description of the Several Views of the Drawing(s)

While the specification concludes with claims particularly pointing out and distinctly claiming that which is regarded as the invention, a more particular description of the invention will be rendered by reference to specific embodiments thereof, which are depicted in the appended drawings, in order to illustrate the manner in which embodiments of the invention are obtained. Understanding that these drawings depict only typical embodiments of the invention, that are not necessarily drawn to scale, and, therefore, are not to be considered limiting of its scope, embodiments will be described and explained with additional specificity and detail through use of the accompanying drawings in which:
Fig. 1 shows a cross-sectional view of a vehicle tyre 10;
Fig. 2 shows cross-sectional views of vehicle tyres 20 comprising circumferential balancing areas according to an embodiment of the invention;
Fig. 3 shows cross-sectional views of vehicle tyres 30 according to an embodiment of the invention;
Fig. 4 shows cross-sectional views of vehicle tyres 40 according to another embodiment of the invention;
Fig. 5 shows various methods of mounting a vehicle tyre 50 according to an embodiment of the invention; and
Fig. 6 shows a method of processing a vehicle tyre 60, and a thixotropic balancing substance, according to an embodiment of the invention.

### Detailed Description of the Invention

In the following detailed description of the embodiments, reference is made to the accompanying drawings which form a part hereof and show, by way of illustration, specific embodiments in which the invention may be practiced. In the drawings, like numerals describe substantially similar components throughout the several views. The embodiments are intended to describe aspects of the invention in sufficient detail to enable those of skill in the art to practice the invention. Other embodiments may be utilized and structural, logical or electrical changes or combinations thereof may be made without departing from the scope of the invention. Moreover, it is to be understood, that the various embodiments of the invention, although different, are not necessarily mutually exclusive. For example, a particular feature, structure or characteristic described in one embodiment may be included within other embodiments. Furthermore, it is to be understood, that embodiments of the invention may be implemented using different technologies. Also, the term "exemplary" is merely meant as an example, rather than the best or optimal. The following detailed description is, therefore, not to be taken in a limiting sense, and the scope of the invention is defined only by the appended claims, along with the full scope of equivalents to which such claims are entitled.

Reference will be made to the drawings. In order to show the structures of the embodiments most clearly, the drawings included herein are diagrammatic representations of inventive articles. Thus, actual appearance of the fabricated structures may appear different while still incorporating essential structures of embodiments. Moreover, the drawings show only the structures necessary to understand the embodiments. Additional structures known in the art have not been included to maintain clarity of the drawings. It is also to be understood, that features and/or elements depicted herein are illustrated with particular dimensions relative to one another for purposes of simplicity and ease of understanding, and that actual dimensions may differ substantially from that illustrated herein.

In the following description and claims, the terms "include", "have", "with" or other variants thereof may be used. It is to be understood, that such terms are intended to be inclusive in a manner similar to the term "comprise".

In the following description and claims, the terms "coupled" and "connected", along with derivatives such as "communicatively coupled" may be used. It is to be understood, that these terms are not intended as synonyms for each other. Rather, in particular embodiments, "connected" may be used to indicate, that two or more elements are in direct physical or electrical contact with each other. However, "coupled" may also mean that two or more elements are not in direct contact with each other, but yet still co-operate or interact with each other.

In the following description and claims, terms, such as "upper", "lower", "first", "second", etc., may be only used for descriptive purposes and are not to be construed as limiting. The embodiments of a device or article described herein can be manufactured, used, or shipped in a number of positions and orientations.

In the present context, the term "nanostructure" is to be understood as referring to any surface structure which has surface details of a size in the nanometre range.

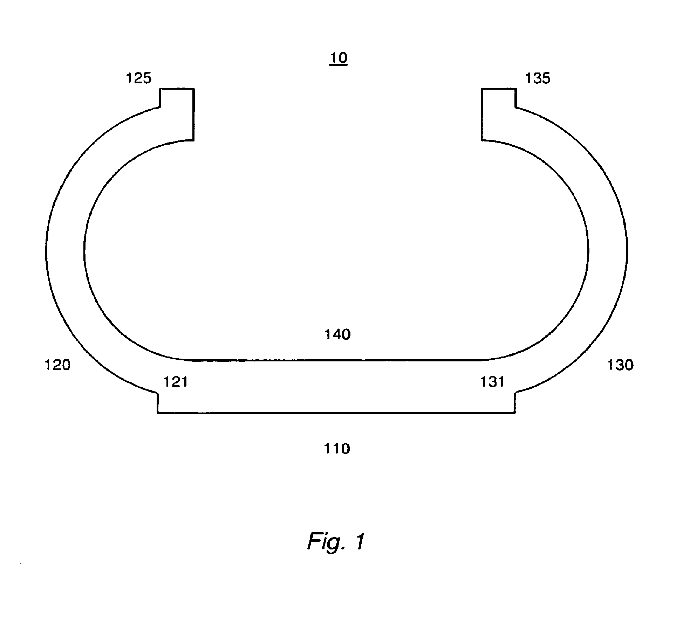

Fig. 1 shows a cross-sectional view of a vehicle tyre 10. The vehicle tyre 10 comprises a circumferential tread surface 110 defining a tread face on an outer surface, a first sidewall portion 120 with a first shoulder portion 121 and a first bead portion 125, a second sidewall portion 130 with a second shoulder portion 131 and a second bead portion 135 axially spaced from the first bead portion 125 to form a toroidal shape and an annular hollow. The tyre 10 may be a pneumatic tyre and comprise a pressurized gas or mixture of gases, for example atmospheric air (not shown). The vehicle tyre 10 may be intended for a motorized vehicle, for example a car, bus, light truck, heavy truck or motorcycle, or an aircraft.

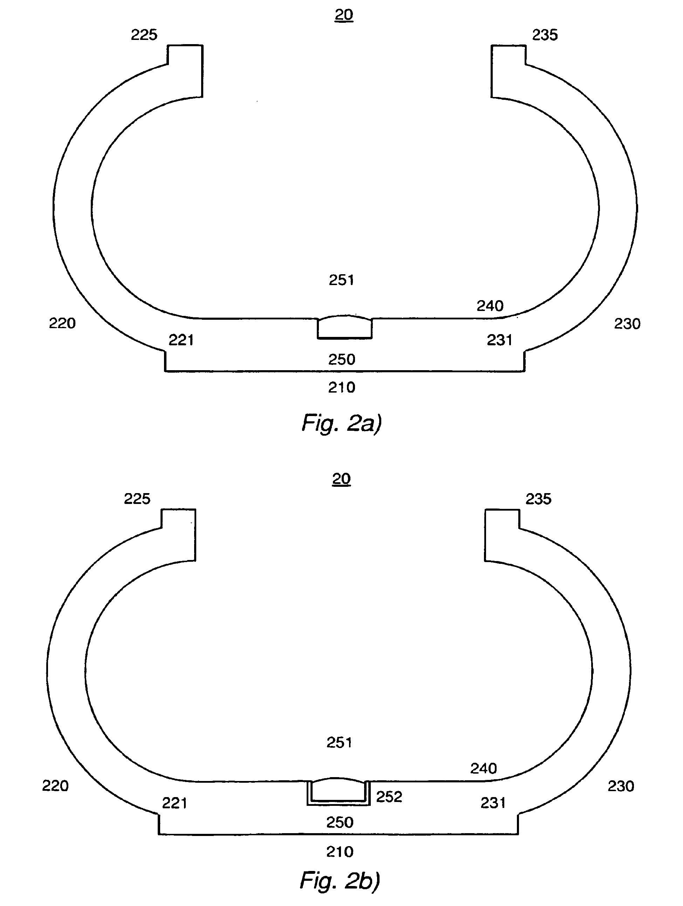

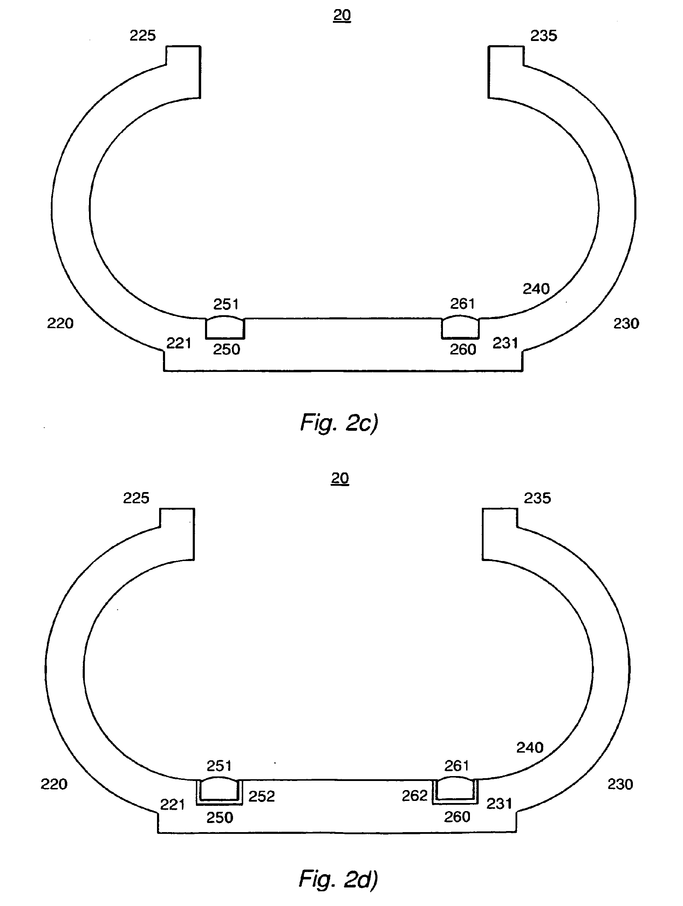

Fig. 2 shows, with reference to Fig. 1, cross-sectional views of vehicle tyres 20 comprising circumferential balancing areas according to an embodiment of the invention.

Fig. 2 a) shows a cross-sectional view of vehicle tyre 20 further comprising a first circumferential balancing area 250 on the inner side 240, for example an inner liner of the tyre 20. The first balancing area 250 may be arranged between the first shoulder portion 221 and the second shoulder portion 231, preferably in a centre area. The first balancing area 250 may be formed as a groove. The groove may be formed during processing of the tyre 20 according to an embodiment of the invention. The balancing area 250 comprises a first amount of the balancing substance 251. The balancing substance may be a thixotropic balancing substance, such as a thixotropic gel. The first amount of the balancing substance 251 may be distributed on the first balancing area (250; 350; 450; 650) during processing of the tyre 20 according to an embodiment of the invention. The first amount of the balancing substance 251 is preferably distributed substantially uniformly. The first amount of the balancing substance 251 may be provided as a first strand of balancing substance. Alternatively, the first amount of the balancing substance 251 may be provided as a first strand of balancing substance and a second strand of balancing substance. Furthermore, the first strand of balancing substance may be provided intermittent with the second strand of balancing substance, such that process time for distributing the first amount of balancing substance 251 may be reduced. A cross section of the first strand of balancing substance or the second strand of balancing substance or both is circular, semicircular, flattened, triangular, quadrilateral, polygonal or the like.

Fig. 2 b) shows a cross-sectional view of vehicle tyre 20 wherein a surface of the first balancing area 250 comprises a first nanostructure 252. The first nanostructure 252 increases movability of the first amount of the balancing substance 251 on the first balancing area 250 for balancing the tyre 20 and a rim forming a vehicle wheel. The first nanostructure 252 may be formed during production of the tyre 20 or later, for example during processing of the tyre 20 according to an embodiment of the invention. If the first nanostructure 252 is formed during production of the tyre 20, it may be formed by a bladder forming the hollow of the tyre 20. Alternatively, the first nanostructure 252 may be provided by distributing, for example spraying and drying or hardening, a material, such as a varnish, comprising nanoparticles on the first balancing area 250.

Thus, in one embodiment the nanostructure could be provided by applying onto the first balancing area 250 any one of known composite "nanovarnishes" incorporating for example modified nanoscale silica particles in an acrylate matrix. Reference is made to the nanovarnishes developed by Daimler-Chrysler AG, Stuttgart, Germany for exterior use on automobiles as disclosed in "Der Spiegel", 25 December 2003 and nanovarnishes marketed by the company nanoproofed® GbR, Gothendorf, Germany or the company Nanogate AG, Saarbruecken, Germany, for example.

The nanovarnish marketed by the company the company Nanogate AG is a heat-curable, two-component nanovarnish comprising of a two-component polyurethane base material containing nanoparticles of a size between 10 and 100 nm. The polyurethane-based material may be mixed in a ratio of 100 parts resin containing the nanoparticles and 3 parts hardener. The nanovarnish layer may be cured at 120 °C for 30 min to give a flexible layer having a surface nanostructure.

Drying or hardening may comprise curing nanomaterial, that is the nanovarnish, using ultra-violet (UV) radiation, that is UV light, for example.

Fig. 2 c) shows a cross-sectional view of vehicle tyre 20 wherein the first balancing area 250 is arranged between the first shoulder portion 221 and the second shoulder portion 231, closer, preferably next, to the first shoulder portion 221. The tyre 20 further comprises a second balancing area 260 comprising a second amount of the balancing substance 261. The second balancing area 260 is arranged between the first shoulder portion 221 and the second shoulder portion 231, closer, preferably next, to the second shoulder portion 231. The second balancing area 260 may be processed similarly or identically to, and preferably simultaneously with, the first balancing area 250.

Fig. 2 d) shows a cross-sectional view of vehicle tyre 20 wherein the first balancing area 250 comprising the first nanostructure 252 is arranged between the first shoulder portion 221 and the second shoulder portion 231, closer, preferably next, to the first shoulder portion 221, and the second balancing area 260 comprising a second nanostructure 262 is arranged between the first shoulder portion 221 and the second shoulder portion 231, closer, preferably next, to the second shoulder portion 231.

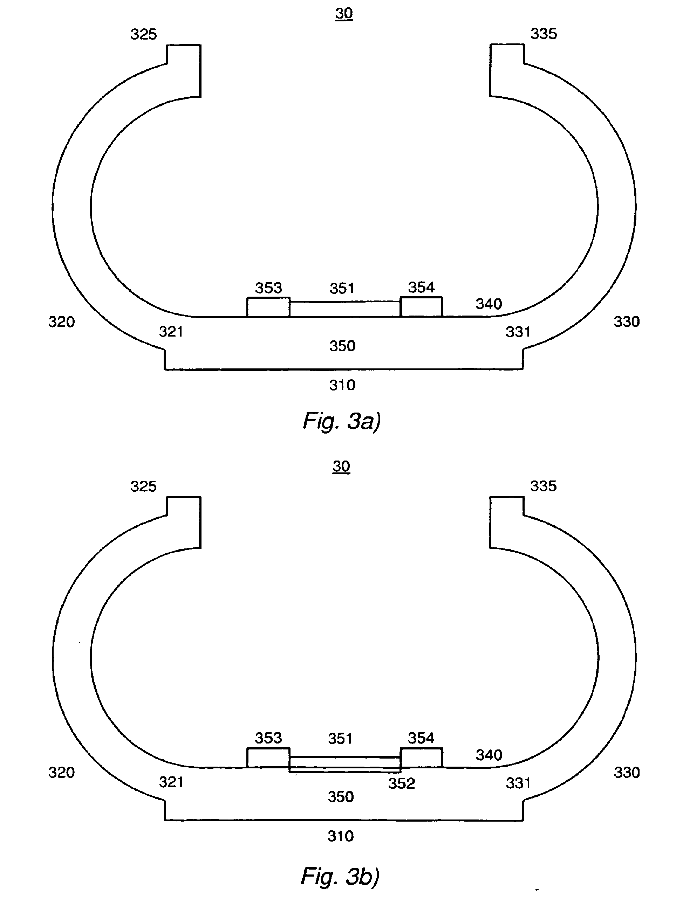

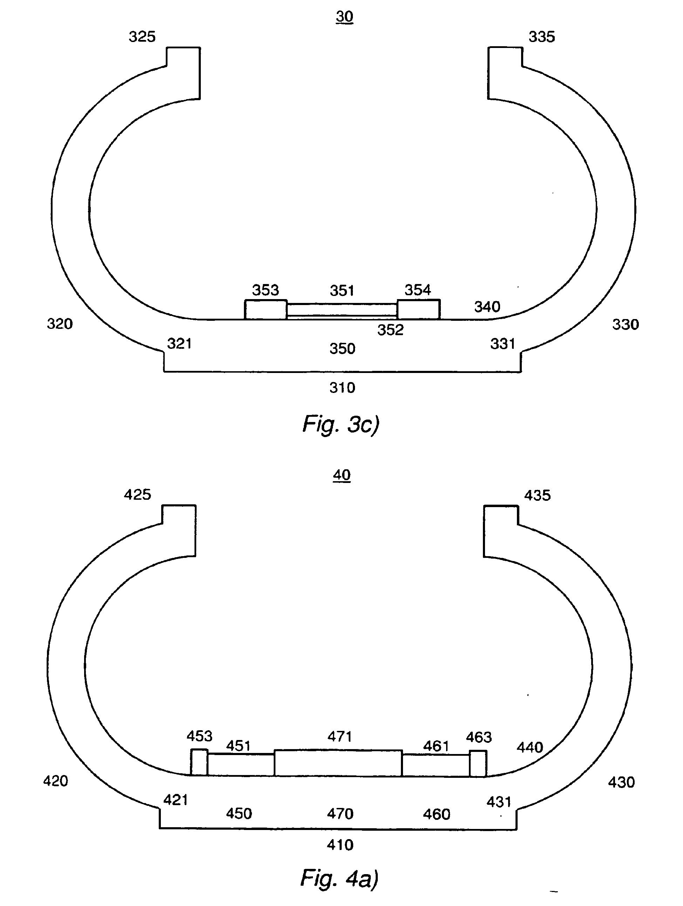

Fig. 3 shows, with reference to Figs 1 and 2, cross-sectional views of vehicle tyres 30 according to an embodiment of the invention.

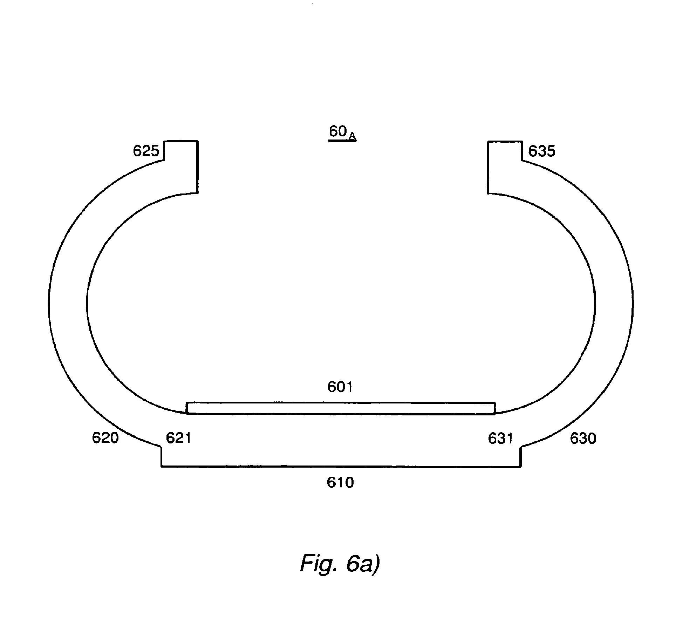

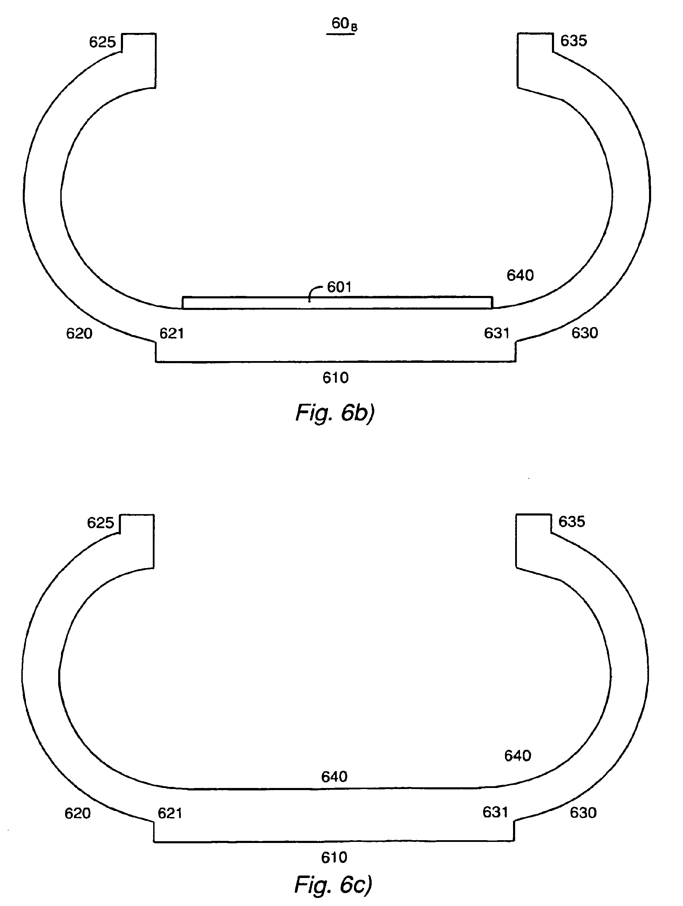

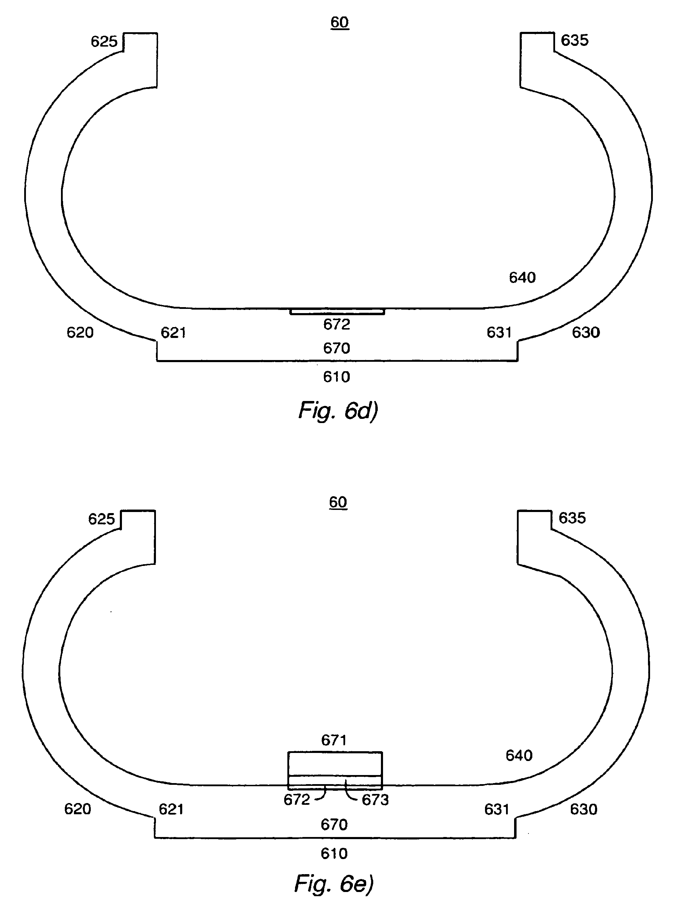

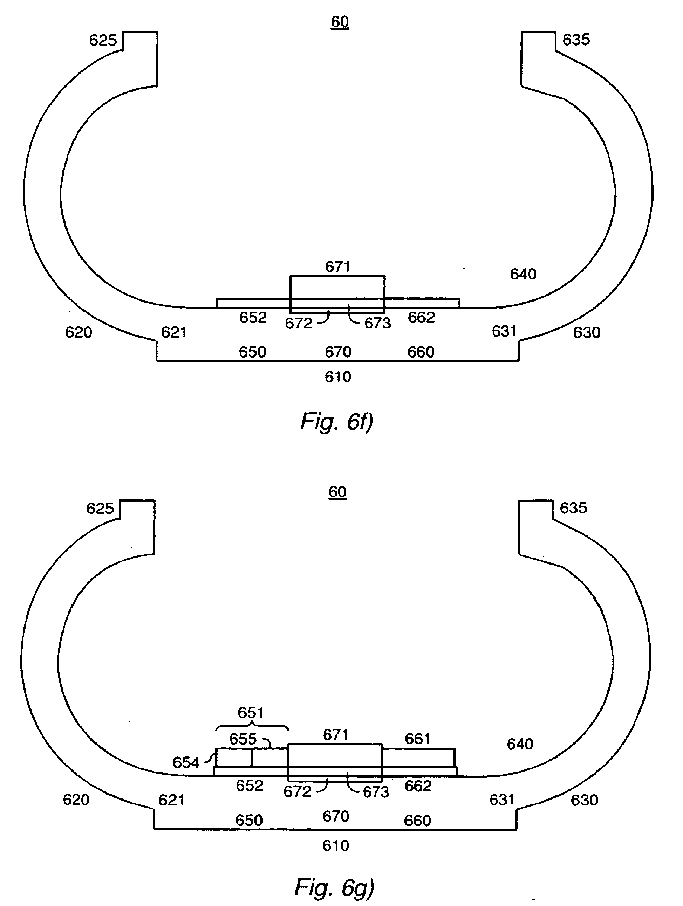

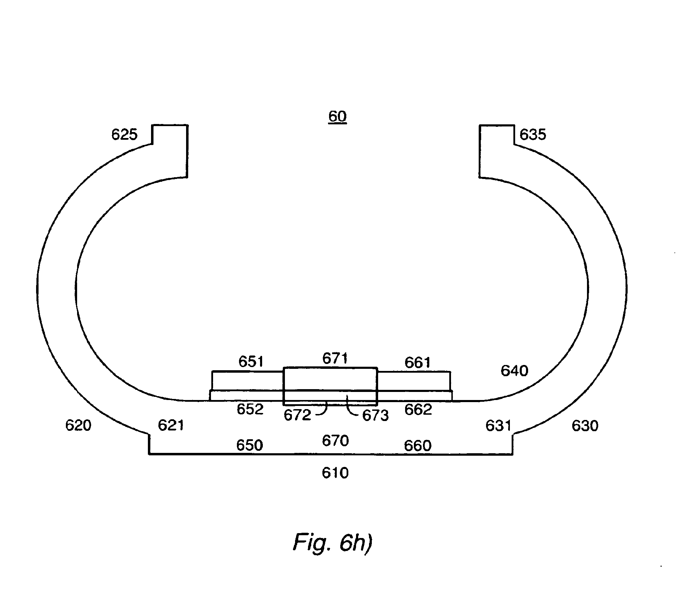

Fig. 3 a) shows a cross-sectional view of vehicle tyre 30 comprising the first circumferential balancing area 350 comprising a first amount of the balancing substance 351 on the inner side 340, for example an inner liner of the tyre 30. The tyre 30 further comprises a first delimiter 353 defining a first border of the first balancing area 350 and a second delimiter 354 defining a second border of the first balancing area 350. The first balancing area 350, first delimiter 353 and second delimiter 354 may form a groove. The first delimiter 353 and second delimiter 354 are formed during processing of the tyre 30 according to an embodiment of the invention as described with reference to Figs 6 d) and e). The first delimiter 353 and second delimiter 354 may be made of cellular material, for example foam material, preferably porous foam material. The first delimiter 353 and second delimiter 354 may be adapted to reduce rolling noise of the tyre 30.

Fig. 3 b) shows a cross-sectional view of vehicle tyre 30 wherein the surface of the first balancing area 350 comprises the first nanostructure 352 as described with reference to Fig. 2 b). The first nanostructure 352 forms part of the inner side 340. If the first nanostructure 352 is formed during production of the tyre 30, it may be formed by a bladder forming the hollow of the tyre 30. Alternatively, if the first nanostructure 352 is formed later, for example during processing of the tyre 30 according to an embodiment of the invention, it may be formed by processing, for example abrading or shaping, the inner side 340.

Fig. 3 c) shows a cross-sectional view of vehicle tyre 30 wherein the surface of the first balancing area 350 comprises the first nanostructure 352 as described with reference to Fig. 2 b). The first nanostructure 352 is formed on the inner side 340. The first nanostructure 352 may be provided by distributing, for example spraying and drying or hardening, a material, such as a varnish, comprising nanoparticles on the first balancing area 350.

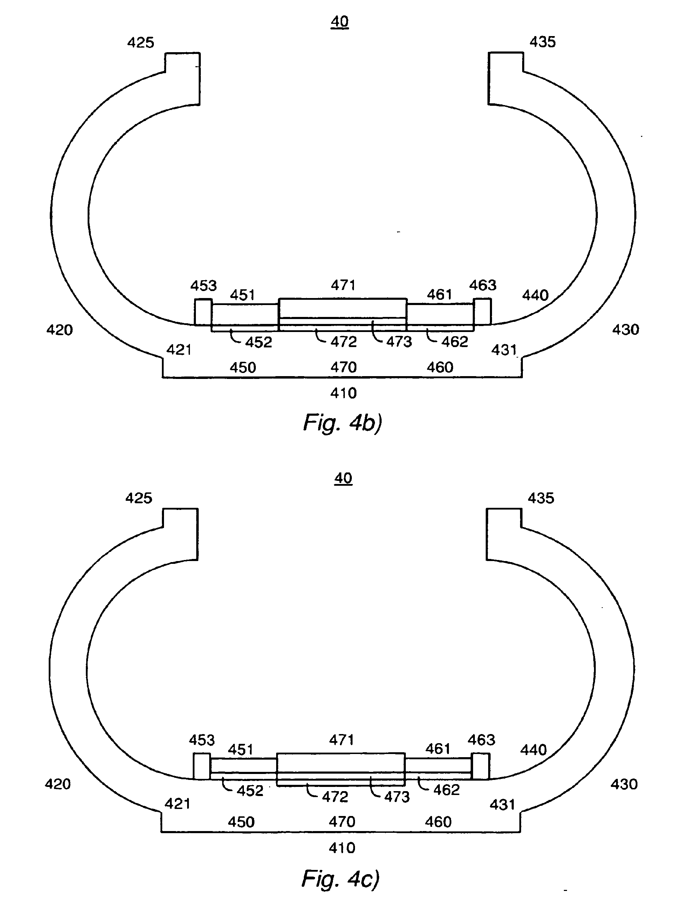

Fig. 4 shows, with reference to Figs 1 and 2, cross-sectional views of vehicle tyres 40 according to another embodiment of the invention.

Fig. 4 a) shows a cross-sectional view of vehicle tyre 40 comprising the first circumferential balancing area 450 comprising a first amount of the balancing substance 451, the second circumferential balancing area 460 comprising a second amount of the balancing substance 461, and a delimiter area 470 comprising a delimiter 471 between the first balancing area 450 and the first balancing area 450 on the inner side 440, for example an inner liner of the tyre 40. The delimiter 471 is formed during processing of the tyre 40 according to an embodiment of the invention as described with reference to Figs 6 d) and e). The delimiter 471 may be made of cellular material, for example foam material, preferably porous foam material. The delimiter 471 may be adapted to reduce rolling noise of the tyre 40. The tyre 40 may further comprise the first delimiter 453 of the first balancing area 450 and the first delimiter 463 of the second balancing area 460. The first delimiter 453 of the first balancing area 450 and the first delimiter 463 of the second balancing area 460 may be made of cellular material, for example foam material, preferably porous foam material. The first delimiter 453 of the first balancing area 450 and the first delimiter 463 of the second balancing area 460 may be adapted to reduce rolling noise of the tyre 40.

Fig. 4 b) shows a cross-sectional view of vehicle tyre 40 wherein the delimiter area 470 may comprise a surface 472 that is activated, for example abraded, to mount the delimiter 471. The delimiter area 470 may further comprise an adhesive layer 473, for example gluing layer. The adhesive layer 473 may be formed on the tyre 40 or the delimiter 471. Alternatively, the delimiter 471 may be fixed to the tyre 40 by other suitable means. The surface of the first balancing area 450 may comprise the first nanostructure 452 and the surface of the second balancing area 460 may comprise the second nanostructure 462. The first and second nanostructures 452, 462 may form part of the inner side 440 as described with reference to Fig. 3 b).

Fig. 4 c) shows a cross-sectional view of vehicle tyre 40 wherein the delimiter area 470 may comprise the surface 472 or the adhesive layer 473 or both as described with reference to Fig. 4 b). The surface of the first balancing area 450 may comprise the first nanostructure 452 and the surface of the second balancing area 460 may comprise the second nanostructure 462. The first and second nanostructures 452, 462 may be formed on the inner side 440 as described with reference to Fig. 3 c).

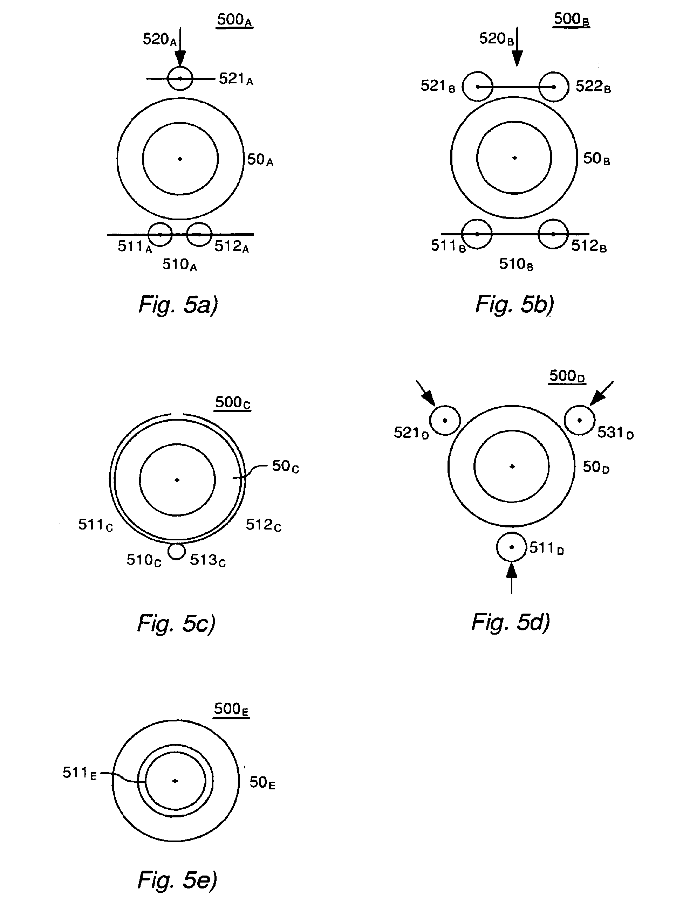

Fig. 5 shows various methods of mounting a vehicle tyre 50 according to an embodiment of the invention. The tyre 50 may be arranged vertically, horizontally or inclined by a certain angle.

The tyre 50 may be mounted to an apparatus, and all acts of the method of processing the tyre 50 may be carried while the the tyre is mounted to the apparatus. In more detail, the apparatus may be operated to mount the tyre 50; and the apparatus may be operated to dismount the tyre 50.

The apparatus may be capable of performing the acts. Thus, the apparatus may comprise tools for performing the acts, and may be stationary. In order to process a plurality of tyres 50 simultaneously, a plurality of preferably similar or identical apparatus may be provided and operated.

Alternatively, the apparatus may not be capable of performing the acts. However, the apparatus may comprise devices for handling the tyre 50, that is moving or transporting the tyre 50 from one dedicated apparatus for performing one act to another dedicated apparatus for performing another act, and may be mobile. In more detail, the apparatus may be operated to move the tyre 50 to an apparatus for processing the tyre 50. In order to process a plurality of tyres 50 simultaneously, a plurality of preferably similar or identical apparatus may be provided and operated to move the tyres from between the dedicated apparatus.

In a preferred embodiment of the invention, a particular tyre 50 is mounted to the apparatus in a first act before the method of processing the tyre 50 is performed and dismounted from the apparatus in a last act after the method of processing the tyre 50 has been performed. For example, a method according to a preferred embodiment of the invention may comprise mounting the tyre 50 to the apparatus; moving the tyre 50 to a dedicated apparatus for distributing a material comprising nano particles on the balancing area; moving the tyre 50 to another dedicated apparatus for inserting the delimiter; moving the tyre 50 to yet another dedicated apparatus for distributing an amount of thixotropic balancing substance; and dismounting the tyre from the apparatus.

In a preferred embodiment of the invention, the tyre 50 may be rotatably mounted to the apparatus, and the apparatus may assist processing the tyre 50 by rotating the tyre 50 while an act is performed, for example by a dedicated apparatus. In more detail, the apparatus may be operated to rotate the tyre 50 when the tyre 50 is processed by the apparatus for processing the tyre 50; and the apparatus may be operated to communicate with the apparatus for processing the tyre 50 for coordinating rotating the tyre 50 with processing the tyre 50.

As the apparatus handles, that is moves, transports and rotates, the tyre 50, and the dedicated apparatus perform the act, design of the dedicated apparatus may be simplified, processing time may be reduced, and, thus, costs may be reduced.

The apparatus may be a robot, for example an industrial robot, such as a robot marketed by the company KUKA AG, 86165 Augsburg, Germany.

This robot may take the tyre 50 and move it to a station, for example a first station, for applying a nano substrate, i.e. the nano material, and rotates the tyre 50 in this station by a suitable extent, for example by 360 degrees, during application of the nano substrate. The robot further moves the tyre 50 to a station, for example a second station, for applying the delimiter 671 and rotates the tyre 50 in this station by a suitable extent, for example by 360 degrees, during application of the delimiter 671. The robot further moves the tyre 50 to a station, for example a third station, for applying the balancing substrate and rotates the tyre 50 in this third station by a suitable extent, for example by 360 degrees, during application of the balancing substrate.

Fig. 5 a) shows a method of mounting the tyre 50 using an apparatus 500A comprising a first portion 510A that may be stationary and a second portion 520A that may be movable with respect to the first portion 510A. The first portion 510A may comprise a first bracket 511A and a second bracket 512A spaced apart from the first bracket 511A. The second portion 520A may comprise a third bracket 521A. For example, a bracket may be a cylinder, such as a roller. The tyre 50 may be mounted to the apparatus 500A by placing the tyre 50 in-between the first bracket 511A, second bracket 512A and third bracket 521A, and relatively moving the second portion 520A towards the first portion 510A. The first bracket 511A, second bracket 512A and third bracket 521A may grip, hold or span the outer surface, for example the tread surface, of the tyre 50. For processing the tyre 50, the tyre 50 may be rotated in the apparatus 500A, for example by rotating the rollers, or a tool may be moved relatively to the tyre 50 or both.

Fig. 5 b) shows a method of mounting the tyre 50 using an apparatus 500B comprising a first portion 510B that may be stationary and a second portion 520B that may be movable with respect to the first portion 510B. The first portion 5108 may comprise a first bracket 5118 and a second bracket 5128 spaced apart from the first bracket 511A as described with reference to Fig. 5 a). The second portion 520B may comprise a third bracket 521B and a fourth bracket 522B spaced apart from the third bracket 521B. The tyre 50 may be mounted to the apparatus 500B by placing the tyre 50 in-between the first bracket 511B, second bracket 512B, third bracket 521B and fourth bracket 522B, and relatively moving the second portion 520B towards the first portion 510B. The tyre 50 may be processed as described with reference to Fig. 5 a).

Fig. 5 c) shows a method of mounting the tyre 50 using an apparatus 500C comprising a portion 510C that may comprise a first bracket 511C and a second bracket 512C. For example, a bracket may be made of a belt, such as a textile belt, a foil, such as a metal foil, a sheet, such as a metal sheet, or a plate, such as a metal plate. The first portion 510C may further comprise a hinge rotatably coupling the first bracket 511C and the second bracket 512C. Alternatively, the first portion 510C may comprise a flexible ring, such as a belt or chain. The tyre 50 may be mounted to the apparatus 500C by placing the tyre 50 in-between the first bracket 511C and second bracket 512C, and relatively moving, for example closing, the second bracket 512C towards the first bracket 511C. The tyre 50 may be processed as described with reference to Fig. 5 a).

Fig. 5 d) shows a method of mounting the tyre 50 using an apparatus 500D comprising a first bracket 511D, a second bracket 521D, and a third bracket 531D as described with reference to Fig. 5 a). The tyre 50 may be mounted to the apparatus 500D by placing the tyre 50 in-between the first bracket 511D, second bracket 521D and third bracket 531D, and moving the first bracket 511D, second bracket 521D and third bracket 531D inwardly towards each other. The tyre 50 may be processed as described with reference to Fig. 5 a).

Fig. 5 e) shows a method of mounting the tyre 50 using an apparatus 500E comprising a bracket 511E. The tyre 50 may be mounted to the apparatus 500E by placing the tyre 50 on the bracket 511E. The bracket 511E may grip, hold, span or clamp a bead portion of the tyre 50. The tyre 50 may be processed as described with reference to Fig. 5 a).

Fig. 6 shows a method of processing a vehicle tyre 60, and a thixotropic balancing substance, according to an embodiment of the invention. The method is described in detail in a preferred order of steps. However, the steps and the order of steps may be varied with same or similar results. For example, a number of steps may be carried out simultaneously. Furthermore, steps may be optional.

Fig. 6 a) shows optionally mounting the tyre 60 to an apparatus for processing the tyre 60. Mounting the tyre 60 may comprise holding, for example gripping, clamping, holding or spanning, the outer side, for example the circumferential tread surface 610, of the tyre 60 or circumferential bead portions 625, 635 of the tyre 60 using, for example, brackets, cylinders or rollers as described with reference to Fig. 5.

Fig. 6 b) shows optionally opening out the bead portions 625, 635 of the tyre 60. Opening out the bead portions 625, 635 may be partial or complete with respect to a circumference of the bead portions 625, 635. Rollers may be inserted, preferably at a suitable angle, in-between the bead portions 625, 635 and pulled apart in opposite directions. Opening out may improve, for tools employed to process the tyre 60, accessibility to the inner side 640.

Fig. 6 c) shows optionally removing old balancing substance 601 from the tyre 60. The tyre may comprise old, possibly used, balancing substance 601, for example if the tyre 60 is a used tyre as may be the case in a repair shop. Removing old balancing substance 601 may comprise cleaning out, for example loosening, rinsing or suction cleaning, the old balancing substance 601.

Cleaning, for example cleaning on an inner liner on the inner side 640, may comprise applying, for example spraying of liquefied or solidified gas, for example liquid air, liquid nitrogen or dry ice, i. e. solidified carbon dioxide (CO₂), to a surface to be cleaned. The liquefied or solidified gas is sprayed towards the surface with a pressure of between approximately 1 and 50 bar, for example between approximately 4 and 10 bar, preferably approximately 7 bar. Cleaning may comprise, for example, dry ice blasting or carbon dioxide snow blasting. In dry ice blast cleaning, the dry ice is preferably in a form of fine granulate or pellets. The pellets are shot out of a nozzle using, for example a compressed gas, such as compressed air or carbon dioxide, and blasted with a high velocity, for example up to the speed of sound, onto the surface to be cleaned and hit residues, for example contaminations, such as old balancing substance 601. The residues cool down, become hard and brittle and, owing to different thermal expansion coefficients of the surface material and the residues, loosen from the surface. Depending factors such as size, i. e. dimension, of the tyre 60 and degree of automation, the cleaning may require between approximately 5 and 60 seconds.

In more details, dry ice blasting involves kinetic energy, thermal shock and thermal kinetic energy. The kinetic energy of the pellets is transferred when they hit the surface, directly dislodging residues as in other blasting methods. The thermal shock results from rapid sublimation of the pellets when they hit the surface that has a much higher temperature. The thermal kinetic effect is the result of the rapid sublimation of the dry ice hitting the surface. The combination of these factors results in "micro-explosions" of gaseous carbon dioxide where each pellet impacts.

This cleaning process has numerous advantages. It does not damage the surface to be cleaned. It does not release humidity, that may support corrosion. It does not employ a solvent, that may be hazardous. As a primary environmental effect the cleaning process releases, in addition to the residues, carbon dioxide. However, as the source of dry ice is typically pre-existing carbon dioxide, the net release of carbon dioxide derives solely from the energy expended for solidifying the carbon dioxide to dry ice and blast the dry ice.

Fig. 6 d) and e) show optionally inserting the delimiter 671 into the tyre 60, the delimiter 671 defining the first border of the first balancing area 650. The second balancing area 660 may be processed similarly or identically to, and preferably simultaneously with, the first balancing area 650.

As shown in Fig. 6 d) inserting the delimiter 671 may comprise pre-processing a delimiter area 670 on the inner side 640. Pre-processing the delimiter area 670 may comprise activating, for example abrading, a surface 672 of the delimiter area 670, cleaning, for example rinsing or suction cleaning, the delimiter area 670 to remove dust, liquids and the like, or both.

Cleaning the delimiter area 670 may performed similarly or identically to cleaning out the old balancing substance 601 as described with reference to Fig. 6 c).

As shown in Fig. 6 e) inserting the delimiter 671 into the tyre 60 may comprise mounting the delimiter 671 on the delimiter area 670. The delimiter 671 may be provided as endless product and cut as needed, or provided in pre-cut form. The delimiter 670 may be made of cellular material, for example foam material, preferably porous foam material. The delimiter 671 may be adapted to reduce rolling noise of the tyre 60. The delimiter area 670 may further comprise an adhesive layer 673, for example gluing layer. The adhesive layer 673 may be formed on the tyre 60 or the delimiter 671. Alternatively, the delimiter 671 may be mounted to the tyre 60 by other suitable means. Mounting the delimiter 671 on the delimiter area 670 may comprise inserting the delimiter 671 into the tyre 60, fixing, for example gluing and drying or hardening, the delimiter 671 onto the delimiter area 670. For drying or hardening, heat, infrared (IR) light or the like may be used. Alternatively, the delimiter 671 or a groove for the balancing area 650 may be produced during production of tyre 60.

Mounting the delimiter 671 on the tyre 60 may comprise fixing the delimiter 671 onto the delimiter area 670, wherein the adhesive layer 673 comprises a nanostructure. Providing the adhesive layer 673 with the nanostructure may comprise distributing, for example spraying and drying or hardening, a material, that is a nanomaterial such as a varnish, comprising nanoparticles on the adhesive layer 673. The adhesive layer 673 may be formed on the delimiter 671. Alternatively, the adhesive layer 673 may be formed on the delimiter area 670 on the tyre 60.

The nanostructure of the adhesive layer 673 may be provided as described with reference to Fig. 6 f). During a chemical crosslinking reaction of the nanomaterial, the delimiter 671, for example a foam layer, may be applied to the nanomaterial and fixed, that is glued, onto the delimiter area 670 by the nanostructure. The delimiter 671 may be with or without adhesive layer. The adhesive layer 673 may comprise any adhesive, for example in the form of pressure-sensitive adhesive, or same components as the nanomaterial. Preferably, the nanostructure of the adhesive layer 673 is provided simultaneously with the first nanostructure 652 or the second nanostructure 662 or both.

Alternatively inserting the delimiter 671 into the tyre 60 comprises forming the delimiter 671 on the delimiter area 670. The delimiter 671 is formed from a delimiter material, for example a curable plastic, and may comprise a cellular material, for example foam material, preferably porous foam material, and forming the delimiter 671 on the delimiter area 670 comprises appling the delimiter material to the delimiter area 670. The delimiter 671 may be adapted to reduce rolling noise of the tyre 60.

The delimiter material may be viscous and comprise one, or two or more components, for instance a first component A, for example a resin, and a second component B, for example a hardener. The delimiter material may be a two-component material. The delimiter material, that is the first component A and the second component B, may react by chemical crosslinking or polymerisation as described with reference to Fig. 6 f). The delimiter material may, for example, comprise polyurethane (PU) being a polymer comprising a chain of organic units joined by urethane links (-NH-CO-O-). The polyurethane polymer may be formed by reacting a monomer comprising at least two isocyanate functional groups with another monomer comprising at least two alcohol groups in the presence of a catalyst.

The delimiter material may be applied through a nozzle, for example by extrusion. Before hardening, the delimiter material may expand, to form the delimiter 671, owing to its own chemical reaction or aeration by which a gas, for example air, is circulated through, mixed with or dissolved in the delimiter material. A two-component dispensing machine, for example Posidot 44 (PD44) marketed by the company FluidSystems GmbH & Co. KG, 42781 Haan, Germany, may be employed for forming the delimiter 671, preferably directly on the delimiter area 670.

Applying the delimiter material to the delimiter area 670 comprises distributing an amount of the delimiter material on the delimiter area 670 substantially uniformly. Applying the amount of the delimiter material may further comprise providing the amount of the delimiter material as a first strand of delimiter material. Applying the amount of the delimiter material may further comprise also applying the amount of the delimiter material as a second strand of delimiter material. A cross section of the first strand of delimiter material or the second strand of delimiter material or both may be circular, semicircular, flattened, triangular, quadrilateral or polygonal. The first strand of delimiter material may be provided in parallel with the second strand of delimiter material.

For flexibility, applying the amount of the delimiter material may further comprise determining the amount of the delimiter material from a characteristic of the tyre 60, for example a size, type or model of the tyre 60, or from a feature of the tyre 60, for example a code or bar code on the tyre, or an electronic identification or radio-frequency identification (RFID) on or in the tyre 60, or both.

Furthermore, distributing the amount of the delimiter material on the delimiter area 670 may compensate, at least partially, for non-uniforimities of the tyre 60.

The delimiter area 670 may further comprise an adhesive layer 673, for example gluing layer. The adhesive layer 673 may be formed on the tyre 60 or the delimiter 671. Alternatively, the delimiter 671 may be fixed to the tyre 60 by other suitable means.

Forming the delimiter 671 on the delimiter area 670 may comprise fixing, for example gluing and drying or hardening, the delimiter 671 onto the delimiter area 670. For drying or hardening, heat, infrared (IR) light or the like may be used.

Forming the delimiter 671 on the delimiter area 670 may comprise fixing the delimiter 671 onto the delimiter area 670, wherein the adhesive layer 673 comprises a nanostructure. Providing the adhesive layer 673 with the nanostructure may comprise distributing, for example spraying and drying or hardening, a material, that is a nanomaterial such as a varnish, comprising nanoparticles on the adhesive layer 673. The adhesive layer 673 may be formed on the delimiter 671. Alternatively, the adhesive layer 673 may be formed on the delimiter area 670 on the tyre 60.

The nanostructure of the adhesive layer 673 may be provided as described with reference to Fig. 6 f). During a chemical crosslinking reaction of the nanomaterial, the delimiter 671, for example a foam layer, may be applied to the nanomaterial and fixed, that is glued, onto the delimiter area 670 by the nanostructure. The delimiter 671 may be with or without adhesive layer. The adhesive layer 673 may comprise any adhesive, for example in the form of pressure-sensitive adhesive, or same components as the nanomaterial. Preferably, the nanostructure of the adhesive layer 673 is provided simultaneously with the first nanostructure 652 or the second nanostructure 662 or both.

Fig. 6 f) shows optionally providing the first balancing area 650 with the first nanostructure 652. Providing the balancing area 650 with the first nanostructure 652 may comprise distributing, for example spraying and drying or hardening, a material, such as a varnish, comprising nanoparticles on the first balancing area 650. For drying or hardening, heat, infrared (IR) light or the like may be used. Alternatively, the first nanostructure 652 may be formed during production of the tyre 60 by a bladder forming the hollow of the tyre 60.

The material, that is the nanomaterial, may provide the first nanostructure as nanosubstrate. The nanomaterial may comprise two or more components, for instance a first component A, for example a resin, and a second component B, for example a hardener. The nanomaterial may be a two-component material. The nanomaterial, that is the first component A and the second component B, may react by chemical crosslinking or polymerisation. The chemical crosslinking reaction may start immediately or soon after mixing the first component A and the second component B.

The chemical crosslinking reaction may proceed rather quickly, depending on the components and their ratios, within between approximately 1 to 240 s, for example between approximately 1 and 10 s, such as between approximately 1 and 3 s.

The first component A and the second component B may react faster at higher temperatures. The chemical crosslinking reaction may be accelerated by heating, directly or indirectly, the first component A or the second component B or both, or the nanomaterial. A suitable temperature may, dependent on factors such as chemical composition, range between approximately 50 and 200 °C, for example between approximately 90 and 150 °C, preferably between approximately 100 and 120 °C.

The first component A and the second component B may react faster in the presence of a chemical accelerator, that is accelerant. An accelerant is a substance that alters a chemical bond or increases the speed of a natural or artificial chemical process. Thus, the chemical crosslinking reaction may be accelerated by the accelerant. An accelerant suitable for the nanomaterial may, dependent on factors such as chemical composition, be N,N-dimethyl-p-toluidine (CH₃C₆H₄N(CH₃)₂), for example. The first component A and the second component B may be brought in contact with the accelerator, directly by mixing the accelerator with the first component A and the second component B or indirectly by applying the accelerator to the mixed first component A and second component B.

The first component A and the second component B may react faster in the presence of a catalyst. A catalyst is an accelerant that is not consumed in a chemical process. Catalysts suitable for the nanomaterial may, dependent on factors such as chemical composition, comprise, for example: peroxidic catalysts, such as acrylic peroxide; alkaline catalysts; acidic catalysts such as trifluoroborane etherate; composite metal cyanide complex catalysts, such as aluminoporphyrine metal complexes and zink cobalt cyanide glycol ether-complex catalysts; non-metal molecular catalysts, such as phosphazen catalysts; and cesium catalysts. The first component A and the second component B may be brought in contact with the catalyst, directly by mixing the catalyst with the first component A and the second component B or indirectly by applying the catalyst to the mixed first component A and second component B. A catalyst may generally be recovered after completion of the chemical process. However, the catalyst is preferably not recovered after completion of the chemical process.

Providing the balancing area 650 with the first nanostructure 652 may further comprise combining, for example bringing together or mixing, the first component A and the second component B.

Combining the first component A and the second component B may comprise adding, simultaneously or sequentially, the components to a vessel, preferably a mixer or blender, and mixing same. Combining the first component A and the second component B may further comprise distributing, for example applying, spraying, brushing or rolling, the mixed components, that is the nanomaterial, on a target area, for example the first balancing area 650.

Combining the first component A and the second component B may comprise, for example before adding the components to a vessel, heating the first component A or the second component B or both. Thus, the chemical crosslinking reaction may be accelerated. Heating may be provided by heating the vessel or a storage container comprising the component to be heated or both. Heating may be provided by heating the target area. Heating may be provided by any suitable means, for example resistance heating, inductive heating, water heating, steam heating, hot air, IR light or UV light.

Combining the first component A and the second component B may comprise, for example before adding the components to a vessel, cooling the first component A or the second component B or both. Thus, the chemical crosslinking reaction may be decelerated. Cooling may be provided by cooling the vessel or the storage container comprising the component to be cooled or both. Cooling may be provided by any suitable means, for example refrigeration, water cooling and air conditioning.

Alternatively, combining the first component A and the second component B may comprise spraying, simultaneously or sequentially, the components towards or on the target area. The components may be sprayed through individual nozzles.

Combining the first component A and the second component B may comprise, for example before spraying the components towards or on the target area, heating the first component A or the second component B or both. Heating may be provided by heating the storage container comprising the component to be heated or the individual nozzle or both. Heating may be provided by heating the target area, for example the inner liner on the inner side 640 of the tyre 60, more particularly the first balancing area 650. A suitable temperature ranges from between approximately 50 and 200 °C, for example between approximately 90 and 150 °C, preferably between approximately 100 and 120 °C.

Preferably, the nanomaterial is applied directly to the uncleaned, untreated inner liner, possibly comprising residues, for example a release agent, such as silicone, silicone oil or talcum. The chemical crosslinking of the nanomaterial includes the release agent and integrates the release agent in the chemical structure of the nanomaterial, leading to an adhesion of the nanostructure to the inner liner and the first balancing area 650 as well as the delimiter 671, for example the foam material, and the delimiter area 670.

Applying the accelerant, the catalyst or both may comprise spraying, simultaneously or sequentially, the substance or substances towards or on the target area. The substance or substances may be sprayed through individual nozzles. For the accelerant or the catalyst, the target area may be on the delimiter 671: while the first component A and the second component B of the nanomaterial form the adhesive layer 673 on the delimiter area 670, the accelerant or catalyst deposited on the delimiter 671 is applied to the first component A and the second component B, and the chemical process is accelerated, when the delimiter 671 is inserted into the tyre 60 and brought in contact with the adhesive layer 673. Thus, the chemical process may be controlled such that the process substantially starts when the delimiter 671 is inserted into the tyre 60 and, owing to increased speed, terminates as quickly as possible. As a result, processing time for providing the first balancing area 650 with the first nanostructure and mounting the delimiter 671 on the delimiter area 670 may be minimized.

Heating may be provided by any suitable means, for example resistance heating, inductive heating, water heating, steam heating, hot air, a heated tool, such as a roller, and, preferably, IR light or UV light.

The method may further comprise providing the second balancing area 660 with the second nanostructure 662. The first nanostructure 652 and the second nanostructure 662 may be provided simultaneously.

Fig. 6 g) shows providing a first amount of the balancing substance 651 to the first circumferential balancing area 650 on the inner side 640 close to the first shoulder 621 of the tyre 60, comprising distributing the first amount of the balancing substance 651 on the first balancing area 650 substantially uniformly. Alternatively, the first balancing area 650 may be on the inner liner on the inner side 640. Providing the first amount of the balancing substance 651 may further comprise providing the first amount of the balancing substance 651 as a first strand 654 of balancing substance. Providing the first amount of the balancing substance 651 may further comprise also providing the first amount of the balancing substance 651 as a second strand 655 of balancing substance. A cross section of the first strand 654 of balancing substance or the second strand 655 of balancing substance or both may be circular, semicircular, flattened, triangular, quadrilateral or polygonal. The first strand 654 of balancing substance may be provided in parallel with the second strand 655 of balancing substance. Providing the first amount of the balancing substance 651 may further comprise determining the first amount of the balancing substance 651 from a characteristic of the tyre 60, for example a size, type or model of the tyre 60, or from a feature of the tyre 60, for example a code or bar code on the tyre, or an electronic identification or radio-frequency identification (RFID) on or in the tyre 60, or both. The apparatus may comprise a computing device possibly comprising a processor, memory, input/output device, such as a screen, a keyboard and possibly a RFID interface device. The computing device may analyse the characteristic, the feature or both, determine the first amount of the balancing substance 651 using, for example, suitable software and stored information, such as a look-up table, determine a discharge rate, and control a discharge device, such as a pump, to distribute the first amount of the balancing substance 651 on the first balancing area 650 substantially uniformly.

The method may further comprise providing the second amount of the balancing substance 661 to the second circumferential balancing area 660 on the inner side 640 close to the second shoulder 631 of the tyre 60. The first amount of the balancing substance 651 and the second amount of the balancing substance 661 may be provided simultaneously.

Fig. 6 h) shows optionally releasing the bead portions 625, 635 of the tyre 60.

The method may further comprise mounting the tyre 60 on a rim to form a vehicle wheel. The method may further comprise filling, that is pressurizing, the tyre 60 with gas or a mixture of gases, for example atmospheric air. The method may further comprise balancing the wheel, for example by spinning the wheel, preferably, under a load condition.

The method may utilize rotating the tyre 60 or moving a tool to process the tyre 60 or both. The method may intermittently employ multiple, for example two, tools to process intermittent segments of the tyre 60.

Embodiments of the inventions comprise a corresponding apparatus, that may carry out the method.

Embodiments of the inventions comprise a corresponding system, that may carry out the method, possibly across a number of devices.

Although specific embodiments have been illustrated and described herein, it will be appreciated by those of ordinary skill in the art, that any arrangement which is calculated to achieve the same purpose may be substituted for the specific embodiments shown. It is to be understood, that the above description is intended to be illustrative and not restrictive. This application is intended to cover any adaptations or variations of the invention. Combinations of the above embodiments will be apparent to those of skill in the art upon reading and understanding the above description. The scope of the invention should, therefore, be determined with reference to the appended claims along with the full scope of equivalents to which such claims are entitled.

## Claims

1. A method of processing a vehicle tyre (20; 30; 40; 50; 60), comprising:
mounting the tyre (20; 30; 40; 50; 60) to an apparatus for handling, for example moving, transporting and rotating, the tyre (20; 30; 40; 50; 60)
processing the mounted tyre (50_{A}-50_{E});
handling the mounted tyre (50_{A}-50_{E}); and
dismounting the processed tyre (20; 30; 40; 50; 60) from the apparatus for handling the tyre (20; 30; 40; 50; 60)
**characterized in that**
said processing comprises:
determining a first amount of a thixotropic balancing substance (251; 351; 451; 651) from a characteristic or feature of the tyre (20; 30; 40; 50; 60),
providing the first amount of the balancing substance (251; 351; 451; 651) to a first circumferential balancing area (250; 350; 450; 650) on an inner side (240; 340; 440; 640) of the vehicle tyre (20; 30; 40; 50; 60), and
distributing the first amount of the balancing substance (251; 351; 451; 651) on the first balancing area (250; 350; 450; 650) substantially uniformly.

2. The method of claim 1, wherein:
the apparatus is operated to mount the tyre (20; 30; 40; 50; 60); and
the apparatus is operated to dismount the tyre (20; 30; 40; 50; 60).

3. The method of claim 1 or 2, wherein:
the apparatus is operated to move the tyre (20; 30; 40; 50; 60) to an apparatus for processing the tyre (20; 30; 40; 50; 60).

4. The method of one of claims 1 to 3, wherein:
the apparatus is operated to rotate the tyre (20; 30; 40; 50; 60) when the tyre (20; 30; 40; 50; 60) is processed by the apparatus for processing the tyre (20; 30; 40; 50; 60).

5. The method of one of claims 1 to 4, wherein:
the apparatus is operated to communicate with the apparatus for processing the tyre (20; 30; 40; 50; 60) for coordinating rotating the tyre (20; 30; 40; 50; 60) with processing the tyre (20; 30; 40; 50; 60).

6. The method of one of claims 1 to 5, wherein:
the apparatus is a robot.

7. The method of claim 6, wherein:
the robot is an industrial robot.

8. The method of one of claims 1 to 7, wherein providing the first amount of the balancing substance (251; 351; 451; 651) further comprises:
providing the first amount of the balancing substance (251; 351; 451; 651) as a first strand (654) of balancing substance.

9. The method of one of claims 1 to 7, wherein providing the first amount of the balancing substance (251; 351; 451; 651) further comprises:
providing the first amount of the balancing substance (251; 351; 451; 651) as a first strand (654) of balancing substance and a second strand (655) of balancing substance.

10. The method of claim 9, wherein the first strand (654) of balancing substance is provided intermittent with the second strand (655) of balancing substance.

11. The method of one of claims 1 to 10, wherein a cross section of the first strand (654) of balancing substance or the second strand (655) of balancing substance or both is circular, semicircular, flattened, triangular, quadrilateral or polygonal.

12. The method of one of claims 1 to 11, wherein the characteristic of the tyre (20; 30; 40; 50; 60) is a size, type or model of the tyre (20; 30; 40; 50; 60).

13. The method of one of claims 1 to 12, wherein the feature of the tyre (20; 30; 40; 50; 60) is a code or bar code on the tyre (20; 30; 40; 50; 60), or an electronic identification or radio-frequency identification (RFID) on or in the tyre (20; 30; 40; 50; 60).

14. An apparatus for processing a vehicle tyre (20; 30; 40; 50; 60) according to the method of one of claims 1 to 13.

15. A system for processing a vehicle tyre (20; 30; 40; 50; 60) according to the method of one of claims 1 to 13.

## Patentansprüche

1. Verfahren zum Bearbeiten eines Fahrzeugreifens (20; 30; 40; 50; 60), umfassend:
Anbringen des Reifens (20; 30; 40; 50; 60) auf einer Vorrichtung zur Handhabung, beispielsweise Bewegen, Transportieren und Drehen, des Reifens (20; 30; 40; 50; 60)
Bearbeiten des angebrachten Reifens (50_{A}-50_{E});
Handhaben des angebrachten Reifens (50_{A}-50_{E}); und
Entnehmen des bearbeiteten Reifens (20; 30; 40; 50; 60) aus der Vorrichtung zur Handhabung des Reifens (20; 30; 40; 50; 60)
**dadurch gekennzeichnet, dass**
die Bearbeitung umfasst:
Bestimmen einer ersten Menge einer thixotropen Auswuchtsubstanz (251; 351; 451; 651) anhand einer Eigenschaft oder eines Merkmals des Reifens (20; 30; 40; 50; 60),
Bereitstellen der ersten Menge der Auswuchtsubstanz (251; 351; 451; 651) an einem ersten umlaufenden Auswuchtbereich (250; 350; 450; 650) an einer Innenseite (240; 340; 440; 640) des Fahrzeugreifens (20; 30; 40; 50; 60), und Verteilen der ersten Menge der Auswuchtsubstanz (251; 351; 451; 651) im Wesentlichen gleichmäßig auf dem ersten Auswuchtbereich (250; 350; 450; 650).

2. Verfahren nach Anspruch 1, wobei:
die Vorrichtung zum Anbringen des Reifens (20; 30; 40; 50; 60) betrieben wird; und
die Vorrichtung zum Entnehmen des Reifens (20; 30; 40; 50; 60) betrieben wird.

3. Verfahren nach Anspruch 1 oder 2, wobei:
die Vorrichtung betrieben wird, um den Reifen (20; 30; 40; 50; 60) zu einer Vorrichtung zum Bearbeiten des Reifens (20; 30; 40; 50; 60) zu bewegen.

4. Verfahren nach einem der Ansprüche 1 bis 3, wobei
die Vorrichtung zum Drehen des Reifens (20; 30; 40; 50; 60) betrieben wird, wenn der Reifen (20; 30; 40; 50; 60) von der Vorrichtung zum Bearbeiten des Reifens (20; 30; 40; 50; 60) bearbeitet wird.

5. Verfahren nach einem der Ansprüche 1 bis 4, wobei
die Vorrichtung zum Datenaustausch mit der Vorrichtung zum Bearbeiten des Reifens (20; 30; 40; 50; 60) betrieben wird, um das Drehen des Reifens (20; 30; 40; 50; 60) mit dem Bearbeiten des Reifens (20; 30; 40; 50; 60) zu koordinieren.

6. Verfahren nach einem der Ansprüche 1 bis 5, wobei
die Vorrichtung ein Roboter ist.

7. Verfahren nach Anspruch 6, wobei:
der Roboter ein Industrieroboter ist.

8. Verfahren nach einem der Ansprüche 1 bis 7, wobei das Bereitstellen der ersten Menge der Auswuchtsubstanz (251; 351; 451; 651) weiterhin umfasst:
Bereitstellen der ersten Menge der Auswuchtsubstanz (251; 351; 451; 651) als einen ersten Strang (654) der Auswuchtsubstanz.

9. Verfahren nach einem der Ansprüche 1 bis 7, wobei das Bereitstellen der ersten Menge der Auswuchtsubstanz (251; 351; 451; 651) weiterhin umfasst:
Bereitstellen der ersten Menge der Auswuchtsubstanz (251; 351; 451; 651) als einen ersten Strang (654) der Auswuchtsubstanz und einen zweiten Strang (655) der Auswuchtsubstanz.

10. Verfahren nach Anspruch 9, wobei der erste Strang (654) der Auswuchtsubstanz in Intervallen mit dem zweiten Strang (655) der Auswuchtsubstanz bereitgestellt wird.

11. Verfahren nach einem der Ansprüche 1 bis 10, wobei ein Querschnitt des ersten Strangs (654) der Auswuchtsubstanz oder des zweiten Strangs (655) der Auswuchtsubstanz oder beider kreisförmig, halbkreisförmig, abgeflacht, dreieckig, vierseitig oder polygon ist.

12. Verfahren nach einem der Ansprüche 1 bis 11, wobei die Eigenschaft des Reifens (20; 30; 40; 50; 60) eine Größe, ein Typ oder ein Modell des Reifens (20; 30; 40; 50; 60) ist.

13. Verfahren nach einem der Ansprüche 1 bis 12, wobei das Merkmal des Reifens (20; 30; 40; 50; 60) ein Code oder Strichcode auf dem Reifen (20; 30; 40; 50; 60) oder eine elektronische Identifikation oder radiofrequenzbasierte Identifikation (RFID) an oder in dem Reifen (20; 30; 40; 50; 60) ist.

14. Vorrichtung zum Bearbeiten eines Fahrzeugreifens (20; 30; 40; 50; 60) gemäß dem Verfahren nach einem der Ansprüche 1 bis 13.

15. System zum Bearbeiten eines Fahrzeugreifens (20; 30; 40; 50; 60) gemäß dem Verfahren nach einem der Ansprüche 1 bis 13.

## Revendications

1. Procédé de traitement d'un pneu de véhicule (20, 30, 40, 50, 60), comprenant :
le montage du pneu (20, 30, 40, 50, 60) sur un appareil de manipulation, par exemple déplacement, transport et rotation, du pneu (20, 30, 40, 50, 60) ;
le traitement du pneu monté (50_{A}-50_{E}) ;
la manipulation du pneu monté (50_{A}-50_{E}) ; et
le démontage du pneu traité (20, 30, 40, 50, 60) de l'appareil de manipulation du pneu (20, 30, 40, 50, 60) ;
**caractérisé en ce que**
ledit traitement comprend :
la détermination d'une première quantité d'une substance d'équilibrage (251, 351, 451, 651) thixotrope à partir d'une caractéristique ou d'un élément distinctif du pneu (20, 30, 40, 50, 60),
l'apport de la première quantité de la substance d'équilibrage (251, 351, 451, 651) sur une première surface d'équilibrage (250, 350, 450, 650) circonférentielle sur une face interne (240, 340, 440, 640) du pneu de véhicule (20, 30, 40, 50, 60), et
la répartition de la première quantité de la substance d'équilibrage (251, 351, 451, 651) sur la première surface d'équilibrage (250, 350, 450, 650) de manière essentiellement uniforme.

2. Le procédé de la revendication 1, dans lequel :
l'appareil est actionné pour monter le pneu (20, 30, 40, 50, 60) ; et
l'appareil est actionné pour démonter le pneu (20, 30, 40, 50, 60).

3. Le procédé de la revendication 1 ou 2, dans lequel :
l'appareil est actionné pour déplacer le pneu (20, 30, 40, 50, 60) vers un appareil de traitement du pneu (20, 30, 40, 50, 60).

4. Le procédé de l'une des revendications 1 à 3, dans lequel :
l'appareil est actionné pour opérer une rotation du pneu (20, 30, 40, 50, 60) quand le pneu (20, 30, 40, 50, 60) est traité par l'appareil de traitement du pneu (20, 30, 40, 50, 60).

5. Le procédé de l'une des revendications 1 à 4, dans lequel :
l'appareil est actionné pour communiquer avec l'appareil de traitement du pneu (20, 30, 40, 50, 60) afin de coordonner la rotation du pneu (20, 30, 40, 50, 60) avec le traitement du pneu (20, 30, 40, 50, 60).

6. Le procédé de l'une des revendications 1 à 5, dans lequel :
l'appareil est un robot.

7. Le procédé de la revendication 6, dans lequel :
le robot est un robot industriel.

8. Le procédé de l'une des revendications 1 à 7, dans lequel l'apport de la première quantité de la substance d'équilibrage (251, 351, 451, 651) comprend en outre :
l'apport de la première quantité de la substance d'équilibrage (251, 351, 451, 651) sous la forme d'un premier cordon (654) de substance d'équilibrage.

9. Le procédé de l'une des revendications 1 à 7, dans lequel l'apport de la première quantité de la substance d'équilibrage (251, 351, 451, 651) comprend en outre :
l'apport de la première quantité de la substance d'équilibrage (251, 351, 451, 651) sous la forme d'un premier cordon (654) de substance d'équilibrage et d'un deuxième cordon (655) de substance d'équilibrage.

10. Le procédé de la revendication 9, dans lequel le premier cordon (654) de substance d'équilibrage est apporté par intermittence avec le deuxième cordon (655) de substance d'équilibrage.

11. Le procédé de l'une des revendications 1 à 10, dans lequel une section transversale du premier cordon (654) de substance d'équilibrage ou du deuxième cordon (655) de substance d'équilibrage ou des deux est circulaire, semi-circulaire, aplatie, triangulaire, quadrilatérale ou polygonale.

12. Le procédé de l'une des revendications 1 à 11, dans lequel la caractéristique du pneu (20, 30, 40, 50, 60) est une taille, un type ou un modèle du pneu (20, 30, 40, 50, 60).

13. Le procédé de l'une des revendications 1 à 12, dans lequel l'élément distinctif du pneu (20, 30, 40, 50, 60) est un code ou un code-barres sur le pneu (20, 30, 40, 50, 60), ou une identification électronique ou une identification par radiofréquence (RFID) sur ou dans le pneu (20, 30, 40, 50, 60).

14. Appareil de traitement d'un pneu de véhicule (20, 30, 40, 50, 60) selon le procédé de l'une des revendications 1 à 13.

15. Système de traitement d'un pneu de véhicule (20, 30, 40, 50, 60) selon le procédé de l'une des revendications 1 à 13.
